Europäisches Patentamt

**European Patent Office**

Office européen des brevets

(19)

(11) Publication number: **0 127 322**
**A1**

(12)

# EUROPEAN PATENT APPLICATION

(21) Application number: **84302844.0**

(22) Date of filing: **27.04.84**

(51) Int. Cl.³: **B 23 B 51/04**

(30) Priority: **28.04.83 US 489440**

(43) Date of publication of application:
**05.12.84 Bulletin 84/49**

(84) Designated Contracting States:
**DE FR GB IT**

(71) Applicant: **GENERAL ELECTRIC COMPANY**
**1 River Road**
**Schenectady New York 12305(US)**

(72) Inventor: **Haque, Sazzadul**
**3290 Wolverine**
**Troy Michigan 48084(US)**

(72) Inventor: **Schroeder, Terry Alan**
**35905 Fredericksburg**
**Farmington Hills Michigan 48018(US)**

(74) Representative: **Turner, Paul Malcolm**
**PAUL M. TURNER AND COMPANY European Patent**
**Attorneys 47 Marylebone Lane**
**London W1M 6DL(GB)**

(54) **Balanced drill with center cutting action.**

(57) A drill is provided having opposed primary and secondary cutting edges. The primary cutting (82) is disposed at an angle less than ninety degrees to the longitudinal axis of the drill (80). The primary cutting edge (82) extends across the longitudinal axis of the drill to a terminus (85) intermediate the longitudinal axis and the periphery of the drill (80). The secondary cutting edge (84) extends inwardly from the periphery of the drill to a point intermediate the periphery and the longitudinal axis of the drill. The primary and secondary cutting edges (82,84) are spaced from one another along the longitudinal axis so that the end of the primary cutting edge (82) nearest the longitudinal axis leads the drill into a workpiece. The primary cutting edge (82) drills the inner part of the hole and the secondary cutting edge (84) drills the outer part of the hole. The primary and secondary cutting edges are designed to generate substantially balanced forces about the longitudinal axis of the drill (80). Flutes (90) extend from each cutting edge (82,84) for efficient and reliable removal of chips.

FIG.14

Croydon Printing Company Ltd

-1-

## BALANCED DRILL WITH CENTER CUTTING ACTION

Drills frequently are used to provide cylindrical holes in metallic workpieces. As is well known, the cutting or boring action of the drill is carried out by an elongated substantially cylindrical member. One end of the drill member is securely mounted in the driving apparatus of the drill assembly which rotates the cutting member about its longitudinal axis. The opposed end of the elongated cutting member includes at least one cutting edge. A flute extends away from the cutting edge and provides a channel for removal of chips of stock that are produced as the hole is drilled.

A twist drill is one type of elongated cutting member commonly used on both wood and metallic stock. Briefly, the twist drill provides a plurality of cutting edges disposed symmetrically about the perimeter of the drill and extending generally along the longitudinal axis thereof. A flute extends from each cutting edge and typically extends helically around the perimeter of the cutting member, hence the term twist drill. Although the cutting edges of the twist drill extend toward the longitudinal axis, they terminate a distance away from the axis.

The structural features of the twist drill have both operational advantages and disadvantages. A principal advantage is that the cutting forces are evenly distributed across the drill. Thus, in many materials, the twist drill will provide a precise hole, with each cutting edge contributing an equal amount to the cutting effort. More specifically, each cutting edge will generate chips or helical strips of stock material having a width equal to the radius of the drill, and a thickness that is a function of the feed rate of the drill into the stock divided by the number of cutting edges. A principal disadvantage of the twist drill is that the portion of the drill between the longitudinal axis and the innermost point of the cutting edges performs no cutting function. Consequently, the innermost portion of the material to be drilled is urged into the area of the cutting edges by an axial force exerted on the drill itself. In effect, the drill must be pushed into the material being drilled so that the material in the centermost portion of that hole can be urged into the path of the cutting edges.

The axial force required can be reduced by minimizing the distance between the longitudinal axis and the innermost point of each cutting edge. Of course, this distance cannot be reduced to zero because the material immediately surrounding the longitudinal axis provides the principal axial support for the twist drill. The amount of axial force can be reduced somewhat further by chamfering the central portion to encourage the movement of the stock material into the area of the cutting edges. Although these structural features minimize the axial force required to advance the twist drill, the axial forces are significant enough to make the twist drill inefficient and ineffective for stocks made of hard metallic substances, such as titanium. The exertion of these axial forces not only leads to an inefficient use of energy in a drilling operation, but also contributes to excessive wear on the twist drill itself. Thus, twist drills must be replaced frequently thereby resulting in a substantial amount of down time for the entire drilling assembly.

A conventional "gundrill" is structurally distinct from the twist drill and, in some respects, is more desirable for drilling holes in hard metals. Briefly, the gundrill includes only one cutting edge and one flute. The single cutting edge extends from a point on the periphery of the gundrill through the longitudinal axis and to a point intermediate the opposite peripheral surface of the gundrill and the central axis thereof. The cutting edge terminates at an apex that is offset from the longitudinal axis of the gundrill so that the cutting end of the gundrill resembles an asymmetrical cone. The gundrill also includes a flute extending generally in an axial direction from the cutting edge to allow for removal of chips of stock that are cut by the gundrill. In operation, the portion of the gundrill extending from the longitudinal axis to the periphery accomplishes all of the cutting. Additionally, because the cut extends the full length of the radius, stock material does not have to be forced toward the cutting edge, and the axial force required is less than that required when using a twist drill. Due to this center cutting feature, the gundrill is more readily adapted to drilling holes in hard metals and has been widely employed in certain metal cutting applications such as drilling a hole in a gun barrel.

Although the single cutting edge and single flute structure of the gundrill provides an efficient center cut, it also results in an imbalance of forces during a drilling operation. This imbalance is particularly critical during the early phases of a drilling operation when the gundrill initially penetrates the stock. More particularly, because the gundrill has only one cutting edge, there is no symmetrical cutting surface to balance the forces exerted by the stock against the single cutting edge. The imbalance of forces with the gundrill frequently causes the gundrill to wobble which, in turn, causes a "runout" phenomena. Thus, the walls of the hole bored by the gundrill are not parallel to one another, but rather, bulge outwardly, particularly near the entry point to the hole.

To offset the inherent runout effects of a gundrill, gundrills are generally fabricated with wear pads which are adapted to bear against the sidewall surface of the drilled hole, and thereby function to guide the gundrill after its initial entry. Also, to minimize runout at the entry point of the hole, bushings frequently are employed to properly guide the gundrill into the desired location. The bushings are located on the surface of the stock and surrounding the area to be drilled. Thus, the wear pads bear against the bushing and improve the alignment of the hole upon initial entry of the gundrill into the stock. Nevertheless, despite the use of wear pads and bushings, the imbalance of forces inherent in the gundrill design frequently causes misalignment that exceed the tolerances of many workpiece specifications. This is particularly likely to happen in workpieces made of very hard metallic substances. To attain the proper tolerances in these workpieces, a second reaming operation is often required. However, this reaming operation, like

- 5 -    0127322

the use of bushings, is extremely time-consuming, inefficient, and costly.

In certain drilling operations, it is necessary
to drill very precise holes for a short distance into a
very hard material. Additionally, it often is desirable
to provide a hole with a bottom that is substantially
planar or flat and which is generally perpendicular to
the side walls of the hole. More specifically, some
design tolerances require the actual diameter of the hole
to be in the range of -.0005 inches to +.0015 inches of
the specified diameter. Also, in many specifications,
the bottom surface of the hole may be non-planar provided the bottom surface includes a shoulder or ledge
adjacent to and perpendicular to the side walls of the
hole and extending a distance inwardly therefrom approximately equal to one half the radius of the hole. This
non-planar bottom surface of the hole is acceptable only
if the distance between the central portion and the peripheral shoulder portion of the hole bottom is very small.

Holes with the above cited specifications are
required, for example, on the cutting head portion of an
oil well drilling apparatus. In this type of apparatus,
a head constructed from a very hard material, such as
hard steel AISI 4340, has a plurality of precise shallow
holes drilled therein to accept bits that will cut through
rock during an oil drilling operation. Twist drills are
currently used by certain tool manufacturers to make these
holes. However, because of the extremely hard stock
material, the twist drills have a very short life, and
it often is necessary to use a reamer before achieving
the desired precision hole. This, of course, is extremely expensive. It is also known to utilize gundrills
for these purposes. However, as mentioned above, the
gundrill is least precise during its initial penetration of the workpiece. Consequently, it is extremely difficult to obtain a precisely drilled shallow hole with a gundrill. Therefore, to achieve these design specifications with a gundrill, it is necessary to utilize a complex arrangement of bushings and also to subsequently ream the hole after the drilling operation.

European Application No. 89123 is directed to a flat bottom drill that is structurally distinct from both the twist drill and the gundrill. Although the drill disclosed in European Patent Application No. 89123 can be used to drill any size hole in any material, the advantages of this invention over prior art drills are particularly apparent in drilling shallow holes (e.g. less than one inch) in extremely hard material such as titanium or very hard alloy steels (e.g. 35 to 40 Rockwell).

Structurally, the flat bottom drill of European Patent Application No. 89123 includes opposed primary and secondary cutting edges extending from which are primary and secondary flutes. The primary cutting edge extends across the longitudinal axis of the drill from a point near the axis to a point on the opposite side of the axis, approximately midway to the periphery. The primary cutting edge is perpendicular to the longitudinal axis of the drill, and defines one axial end of the drill. The outermost portion of the radius on which the primary cutting edge is disposed is offset in the longitudinal direction of the drill with respect to the primary cutting edge so that it performs no cutting function, as explained in greater detail below. The primary flute defines a substantially pie-shaped wedge removed from the body of the drill. This pie-shaped flute decreases in radial depth as the flute extends axially away from the primary cutting edge in order to increase the strength of the web —————————————

supporting the cutting edges.

The secondary cutting edge of the flat bottom drill to which European Patent Application No.89123 is directed, is also perpendicular to the longitudinal axis of the drill but is located on the side of the drill opposite the primary cutting edge. Additionally, the secondary cutting edge extends from the periphery of the drill at least to a point midway between the periphery and the longitudinal axis. The secondary cutting edge is axially separated from the primary cutting edge so that it follows the primary cutting edge into the hole. As discussed below, the separation along the longitudinal axis of the drill between the primary and secondary cutting edges is a function of the feed rate of the drill.

In operation, the primary cutting edge of the drill disclosed and claimed in European Patent Application No.89123 cuts an annular central section of the resulting hole extending from the axis of the resulting hole to a point approximately midway between the longitudinal axis and the periphery of the hole. The secondary cutting edge follows the primary cutting edge into the hole and cuts a section extending from the periphery of the resulting hole to a point approximately midway between the periphery and the centre. Thus, the primary cutting edge cuts the centre part of the hole and the secondary cutting edge cuts the outer radial part of the hole. The relative lengths of the primary and secondary cutting edges can be varied according to the material being drilled, but are selected to provide substantially equal and opposite forces on the opposed cutting sides of the drill. Therefore, the flat bottom drill of European Patent Application No.89123 provides balanced forces that are not attainable by a conventional gundrill. Furthermore, as mentioned above, the primary cutting edge of the drill of European Patent Application No.89123 extends across the longitudinal axis of the drill. Consequently, unlike the twist drill, the flat bottom drill provides a centre cutting action. This feature of balanced forces, combined with a centre cutting action, enables the subject drill of European Patent Application No. 89123 to drill an extremely precise hole into a hard metallic stock.

The flat bottom drill of European Patent Application No. 89123 differs significantly from the twist and gundrills in that the combination of primary and secondary, or inner and outer, cutting edges ensures that the maximum chip width equals approximately one quarter of the diameter of the drilled hole. In both of the prior art drills described above, the chip width generally equals the radius of the drill. The wider chips provided by the prior art drills have a tendency to jam in the flutes thereby imbalancing the forces on the drill and contributing to the runout phenomena described above. In the drill of European Patent Application No.89123 by reducing the size of the chips channeled by each flute by approximately 50%, the chips are more readily removed from the flutes, thereby ensuring that the opposed forces on the subject drill will remain balanced.

As explained above, both the primary and secondary cutting edges of the drill to which European Patent Application No.89123 is directed, are perpendicular to the longitudinal axis of the drill. In most instances, the axial separation between the primary and secondary cutting edges will be very small. Therefore, the hole drilled by the subject drill will have a bottom surface that is substantially planar and perpendicular to the side walls of the hole. More specifically, the central portion of the bottom surface of the drilled hole will define a well that is separated from the outer portion of the bottom surface of the drilled hole by a distance equal to the axial separation between the primary and secondary cutting edges.

Despite the many advantages of the drill disclosed and claimed in European Patent Application No. 89123, it has been discovered recently that it occasionally is desirable to have a drill that can drill to even closer tolerances at the entry into the workpiece. In these applications it may not be necessary for the bottom of the hole to be flat. For example, in certain industrial applications, the central bottom portion of the hole can be of any configuration, provided there is a peripheral shoulder at the bottom of the hole that is perpendicular to the side walls of the hole, and further provided that the side walls are drilled to even closer tolerances than were heretofore attainable in a single drilling operation.

Accordingly, it is an object of the subject invention to provide a drill that can precisely bore holes in a variety of materials.

It is another object of the subject invention to provide a drill that is particularly useful for drilling precise shallow holes in extremely hard material.

It is a further object of the subject invention to provide a drill that can drill a hole, the bottom of which includes a peripheral shoulder that is substantially perpendicular to the side walls of the hole.

It is an additional object of the subject invention to provide a drill that operates so as to balance the cutting forces during a drilling operation.

It is yet another object of the subject invention to provide a drill that will reliably remove chips of stock material from the drilled hole.

It is an additional object of the subject invention to provide a drill that can precisely drill holes without the use of bushings or the like.

It is still another object of the subject invention to provide a drill that can precisely drill holes without requiring a subsequent reaming operation.

It is a further object of the subject invention to provide a drill capable of drilling through hard metallic materials and which has a long life in operation.

The subject drill, like the flat bottom drill of European Patent Application No.89123, includes opposed primary and secondary cutting edges extending from which are primary and secondary flutes. The primary cutting edge defines one axial end of the drill and extends from or across the longitudinal axis of the drill to a point approximately midway between the longitudinal axis and the periphery. Unlike the flat bottom drill in European Patent Application No.89123 the primary cutting edge of the subject drill is not perpendicular to the longitudinal axis of the drill. Rather, the primary cutting edge of the subject drill is disposed at an angle to the longitudinal axis of the drill such that the longitudinal distance from the primary cutting edge to the mounting end of the drill varies inversely with the radial distance from the longitudinal axis. With this structure, the portion of the primary cutting edge nearest the longitudinal axis leads the subject drill into the hole. The primary cutting edge terminates at the longitudinal axis or can extend slightly across it. If the primary cutting edge extends across the longitudinal axis, it is preferable that at least a portion of the primary cutting edge extending across the longitudinal axis be chamfered away from the cutting end of the drill. As with the drill disclosed in European Patent Application No.89123, the outermost portion of the radius on which the primary cutting edge is disposed is offset in the longitudinal direction of the drill with respect to the primary cutting edge so that it performs no cutting function.

The secondary cutting edge of the subject drill is displaced from the primary cutting edge toward the mounting end of the drill by a distance that corresponds to the feed rate of the drill. As with the drill to which European Patent Application No.89123 is directed the secondary cutting edge of the subject drill extends from the periphery of the drill at least to a point midway between the periphery and the longitudinal axis. Thus, as with the drill described in the parent application, the primary cutting edge of the subject drill drills the innermost part of the hole while the secondary cutting edge drills the outermost part of the hole.

To ensure a complete explanation of the principles and structure of the subject invention, the preferred embodiments of both the drill disclosed in the European Patent Application No. 89123 and the subject improvement thereto are described in the following detailed description.

Figure 1 is a perspective view of the preferred embodiment of the flat bottom drill.

Figure 2 is an end view of the drill shown in Figure 1.

Figure 3 is a side elevational view of the flat bottom drill taken along the direction indicated by arrow 3 in Figure 2.

Figure 4 is a side elevational view of the flat bottom drill taken along the direction indicated by arrow 4 in Figure 2.

Figure 5 is a side elevational view of the flat bottom drill taken along the direction indicated by arrow 5 in Figure 2.

Figure 6 is a perspective view of the second embodiment of the flat bottom drill.

Figure 7 is an end view of the flat bottom drill shown in Figure 6.

Figure 8 is a side elevational view of the flat bottom drill shown in Figure 6 taken along the direction indicated by arrow 8 in Figure 7.

Figure 9 is a perspective view of a third embodiment of the flat bottom drill in which both the primary and secondary cutting edges are chamfered to increase the thickness of the central web.

Figure 10 is an end view of the flat bottom drill shown in Figure 9.

Figure 11 is a side elevational view of the flat bottom drill shown in Figure 9 taken along the direction indicated by arrow 11 in Figure 10.

Figure 12 is a perspective view of a fourth embodiment of the flat bottom drill in which a wall of the primary flute is concave to further facilitate chip removal.

Figure 13 is a cross-sectional view of a workpiece having a hole bored by the flat bottom drill.·

Figure 14 is a side elevational view of the subject drill for drilling a hole in which the central bottom portion is not flat.

Figure 15 is a cross-sectional view of a workpiece having a hole bored by the drill shown in Figure 14.

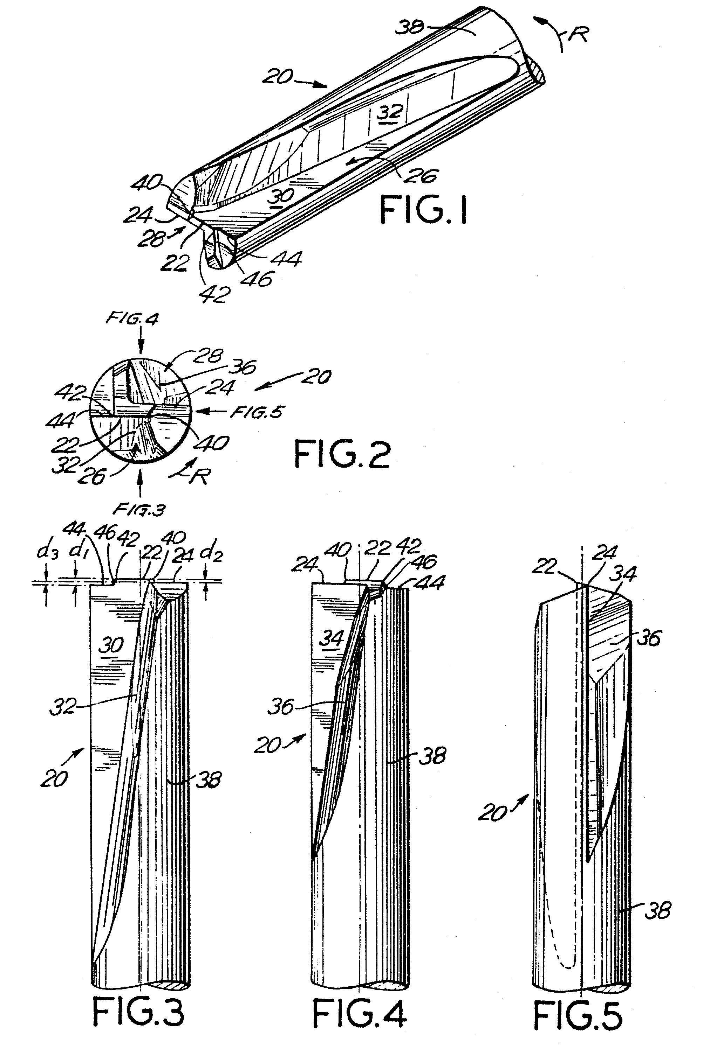

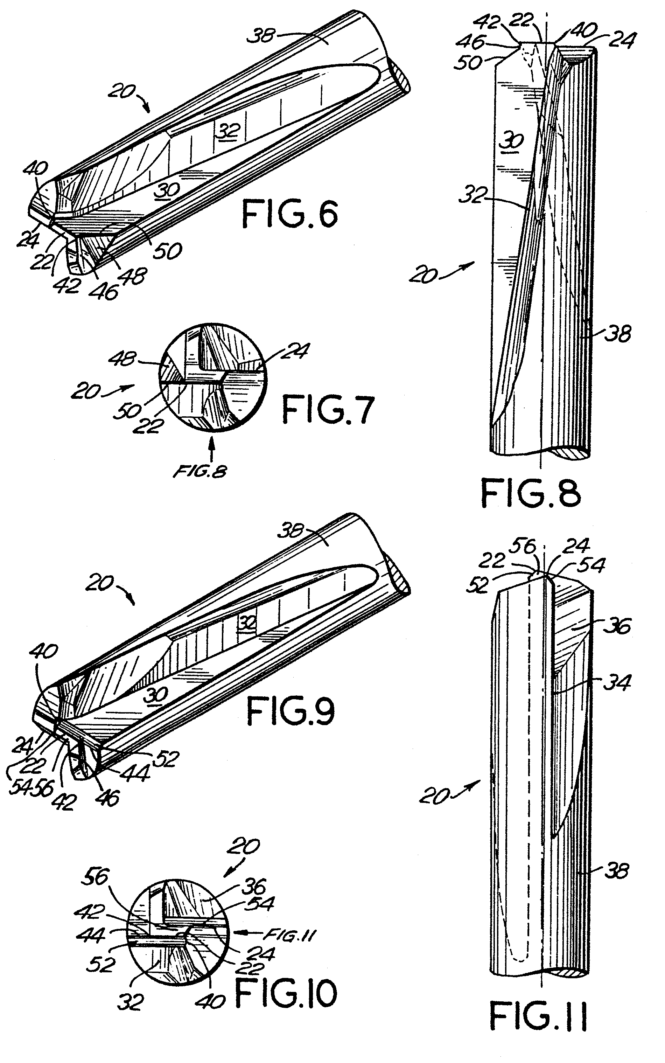

The flat bottom drill, which is designated generally by the numeral 20 in Figure 1, is a substantially cylindrical structure designed to rotate about its longitudinal axis. Preferably, the flat bottom drill 20 is fabricated from a unitary piece of high strength medium alloy steel that is case hardened to be very hard on the outside.

As shown in Figures 2 and 3, flat bottom drill 20 includes a primary cutting edge 22 and a secondary cutting edge 24. Primary flute 26 is defined by surfaces 30 and 32, which form a generally wedge shaped section removed from flat bottom drill 20 and which extends away from primary cutting edge 22. Surface 30 of primary flute 26 is aligned substantially in a radial direction. Surface 32 of primary flute 26 extends in a non-axial direction so as to terminate at the peripheral surface 38 of flat bottom drill 20. Surfaces 30 and 32 of primary flute 26 intersect at an angle which preferably is in the range of $100^{\circ}$ to $120^{\circ}$. In the preferred embodiment as shown in Figures 1-5, this angle equals approximately $110^{\circ}$. By making the angle of intersection of surfaces 30 and 32 greater than a right angle, chips of stock material cut by primary cutting edge 22 are more reliably and efficiently removed through primary flute 26. Additionally, as shown most clearly in Figures 1 and 3, the portion of surface 32 in primary flute 26 nearest primary cutting edge 22 can be chamfered across the centreline of flat bottom drill 20 to further enhance the channelization of chips within primary flute 26. Primary flute 26 must be at least as long as the hole being drilled to ensure efficient, reliable chip removal.

Turning to Figure 4, secondary flute 28 is defined by surfaces 34 and 36. Surface 34 of secondary flute 28 is substantially parallel to surface 30 of primary flute 26. Surface 36 of secondary flute 28 extends in a non-axial direction so as to terminate at peripheral surface 38 of flat bottom drill 20. As with primary flute 26, surface 36 of secondary flute 28 intersects surface 34 thereof at an angle that preferably is in the range of 100° to 120°. Secondary flute 28 is at least as long as the hole being drilled to ensure proper chip removal, but need not be precisely the same length as primary flute 26.

As shown in Figures 1, 2, and 3, primary cutting edge 22 has an innermost end point 40 slightly to one side of the longitudinal axis of flat bottom drill 20. The outer primary cutting terminus 42 of primary cutting edge 22 is on the opposite side of the longitudinal axis of flat bottom drill 20 from innermost end point 40, and a distance approximately halfway between the axis and the periphery 38 of drill 20. As shown most clearly in Figure 3, primary cutting edge 22 is substantially perpendicular to the longitudinal axis, and defines the most extreme cutting end of flat bottom drill 20.

Adjacent to and radially aligned with primary cutting edge 22 is a non-cutting edge 44 which is separated in a longitudinal direction from primary cutting edge 22 by step 46. Non-cutting edge 44 extends from the periphery 38 of flat bottom drill 20 inwardly to step 46. The longitudinal separation between cutting edge 22 and non-cutting edge 44 is indicated by distance "$d_1$" in Figure 3. As explained in greater detail below, non-cutting edge 44 performs no cutting function.

Secondary cutting edge 24 is substantially parallel to primary cutting edge 22, but is located on the opposite side of flat bottom drill 20. More specifically, secondary cutting edge 24 is perpendicular to the longitudinal axis of flat bottom drill 20, and extends inwardly from the periphery 38 a distance at least to the radial distance between the periphery 38 and outer primary cutting terminus 42 of primary cutting edge 22.

As shown most clearly in Figures 3, 4, and 5, secondary cutting edge 24 is offset from primary cutting edge 22 in a longitudinal direction by distance "$d_2$". The distance "$d_2$" is a function of both the design specifications of the desired hole to be drilled and the feed rate of drill 20. In many applications, the distance "$d_2$" can be as small as .003 to .004 inches. It is important to emphasize that the distance "$d_1$", which is the separation between non-cutting edge 44 and primary cutting edge 22 measured along the longitudinal axis is greater than the distance "$d_2$" which is the separation between secondary cutting edge 24 and primary cutting edge 22, also measured along the longitudinal axis of drill 20. Additionally, distance "$d_3$", which is the separation between secondary cutting edge 24 and non-cutting edge 44 measured along the longitudinal axis of drill 20, also is a function of feed rate of drill 20. More specifically, non-cutting edge 44 follows primary and secondary cutting edges 22 and 24 into an already drilled hole. By this unique arrangement, primary cutting edge 22 cuts the innermost portion of the hole to be drilled, secondary cutting edge 24 cuts the outermost portion of the hole to be drilled, and edge 44 performs no cutting function.

- 18 -

The precise dimensions of primary and secondary edges 22 and 24 and the separation "$d_2$" measured along the longitudinal axis will vary according to the specifications of the material being drilled, but will be selected to ensure that the forces on both the primary and secondary cutting edges will be substantially equal. Thus, the structure provides center cutting by primary cutting edge 22, and also provides balanced cutting by both primary cutting edge 22 and secondary cutting edge 24. In this manner, the subject flat bottom drill 20 provides the advantages of both the prior art gundrills and twist drills with the disadvantages of neither.

In operation, primary cutting edge 22 is the first portion of drill 20 to contact the workpiece. After this initial contact, the rotation of drill 20 about its longitudinal axis causes the portion of primary cutting edge 22 between the longitudinal axis and its outer primary cutting terminus 42 to begin cutting the center portion of the hole. Because the entire portion of primary cutting edge 22 from the centerline to outer primary cutting terminus 42 contributes to the cutting operation, the subject flat bottom drill 20 can be easily fed into the stock material without excessive axial force.

Secondary cutting edge 24 advances into the stock material after primary cutting edge 22 has drilled a hole to depth "$d_2$" (e.g., the separation between the primary and secondary cutting edges 22 and 24 measured along the longitudinal axis). After the secondary cutting edge 24 contacts the stock material, rotation of drill 20 causes secondary cutting edge 24 to drill the outermost portion of the hole. As mentioned above,

distance "$d_2$", is a function of the feed rate, and is selected to ensure that the secondary cutting edge will perform no cutting operation on the innermost part of the hole.

Chips removed from the stock material by flat bottom drill 20 are such that each chip is approximately half as wide as chips produced by either gun or twist drills. More particularly, the chips of stock material produced by the primary cutting edge 22 will have a width substantially equal to the distance from the center line to outer primary cutting terminus 42 of primary cutting edge 22, which is approximately one half the radius of flat bottom drill 20. Similarly, the chips of stock material produced by secondary cutting edge 24 will have a width equal to the difference between the radius of drill 20 and the width of chips produced by primary cutting edge 22. Again, these chips will be approximately equal to one half the radius of flat bottom drill 20. This cutting pattern differs significantly from the cutting patterns of both twist and gundrills, which produce chips having a width equal to the radius of the drill. By segmenting the chips into approximately equal inner and outer portions, flat bottom drill 20 ensures that the chips can be efficiently and reliably removed through primary and secondary flutes 26 and 28. On the other hand, the chips produced by prior art twist or gundrills are wider than chips produced by flat bottom drill 20, and therefore, are substantially more likely to jam in the flutes of those drills. Chip material that is retained, even temporarily, in the flutes of known drills can cause an imbalance of forces that could contribute to runout, thereby creating unacceptable tolerances for many design specifications. With flat bottom drill 20, on the other hand, the chips are half as wide as the above mentioned prior art drills, and therefore are easily removed through flutes 26 and 28.

Turning to Figures 6, 7, and 8, an alternate embodiment of the flat bottom drill 20 is shown where the endmost corner produced by surface 30 of primary flute 26 and the periphery 38 of the flat bottom drill 20 is chamfered to further ensure that the edge extending radially outward from primary cutting edge 22 will perform no cutting function. This chamfering produces triangular surface 48 which is angularly related to both the longitudinal axis of flat bottom drill 20 and the peripheral surface 38 thereof. The distance measured along the longitudinal axis of drill 20 between triangular surface 48 and primary cutting edge 22 is at all points greater than the distance between primary and secondary cutting edges 22 and 24, as measured along the longitudinal axis of drill 20. Furthermore, the offset between primary and secondary cutting edges 22 and 24 and triangular surface 48 is a function of the feed rate of flat bottom drill 20, so that secondary cutting edge 22 only cuts the outermost portion of the hole, and non-cutting edge 50 of triangular surface 48 performs no cutting function.

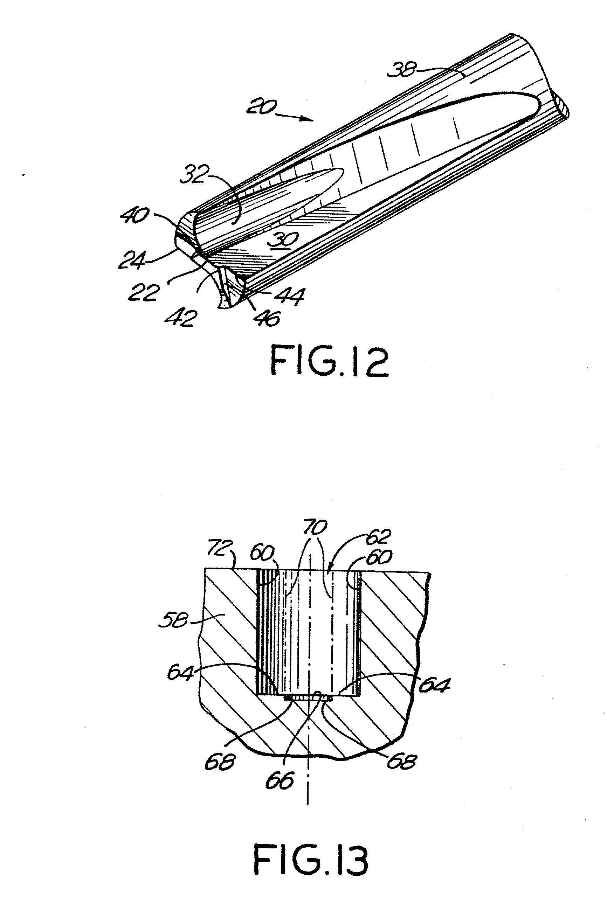

In many applications, the stock material with which the flat bottom drill 20 is used is extremely hard. To increase the strength and useful life of flat bottom drill 20 for these particularly demanding applications, surface 30 of primary flute 26 and surface 34 of secondary flute 28 may be offset away from each other and away from the longitudinal axis of drill 20, as shown in Figures 9 through 11. The primary and secondary cutting edges 22 and 24, however, remain in the relative positions explained above by appropriate chamfering. More specifically, as shown most clearly in Figures 10 and 11, chamfered surface 52 extends angularly from surface 30 of primary flute 24 to primary cutting edge 22. Similarly, chamfered surface 54 extends angularly from surface 34 of secondary flute 28 to secondary cutting edge 24. This embodiment provides a stronger, wider web portion 56 as is apparent by comparing Figure 2 to Figure 10 or by comparing Figure 5 to Figure 11.

In the embodiment of the subject invention shown in Figure 12, surface 32 of primary flute 26 and surface 36 of secondary flute 28 are both provided with a concave configuration. Preferably, this particular shape is provided by a pressing operation during the fabrication of flat bottom drill 20. This concave configuration of surfaces 32 and 36 is desirable for work on certain metal stocks to provide a better movement of chips through the primary and secondary flutes 26 and 28.

Figure 13 shows a typical hole drilled in a piece of stock 58 by flat bottom drill 20. Stock material 58 is an extremely hard material, such as titanium or a very hard alloy steel. The cylindrical side wall 60 of hole 62 is drilled to an extremely tight tolerance by a single drilling operation with flat bottom drill 20. For example, on a one half inch diameter hole 62, the side walls are provided with a tolerance of -.0005 inches to + .0015 inches in a single drilling operation. Hole 62 in stock material 58 is relatively shallow, such that side walls 60 may be more than one-fourth of an inch to approximately two inches in length.

The bottom of hole 62 is defined by annular shoulder 64 and circular central portion 66. The angle formed by the intersection of cylindrical side wall 60 and annular shoulder 64 is substantially equal to 90°. Central circular portion 66 is substantially parallel to annular shoulder 64, and therefore also is substantially perpendicular to cylindrical side walls 60. These perpendicular and parallel relationships result from the orthagonal alignment of primary and secondary cutting edges 22 and 24 to the centerline of flat bottom drill 20. The length of well wall 68 extending between annular shoulder 64 and circular bottom portion 66 equals distance "$d_2$", which as explained above, is the separation between the primary and secondary cutting edges 22 and 24 measured along the longitudinal axis of the subject drill 20.

For very hard stock materials 58, such as hard steel AISI 4340, the feed rate of flat bottom drill 20 into stock 58 would be relatively low. Hence, the distance "$d_2$" separating the primary and secondary cutting edges 22 and 24 would be very small. For example, in many applications on very hard stock materials 58 the axial separation between the primary and secondary cutting edges 22 and 24 would be in the range of .003 inches to .004 inches. Therefore, well wall 68 also would be very small and the hole 62 in stock material 58 would have a nearly planar bottom surface.

During a drilling operation, the cylindrical portion between dashed lines 70 extending from the surface 72 of stock 58 to circular central portion 66 would be drilled entirely by primary cutting edge 22. The annular tubular section extending between dashed lines 70 and cylindrical side wall 60 from surface 72 of stock 58 to annular shoulder 64 would be drilled entirely by secondary cutting edge 24.

The portions of stock material 58 that had extended between dashed lines 70 and cylindrical side wall 60 is cut entirely by secondary cutting edge 24 and is removed entirely through secondary flute 28. These chips of stock material 58 have a maximum width equal to the distance from dash lines 70 to cylindrical side wall 60. As explained above, this distance also is approximately one half the radius of flat bottom drill 20. The secondary flute 28, like the primary flute 26, has a maximum width at least equal to the radius of flat bottom drill 20. Therefore, the narrow chips produced by the secondary cutting edge 24 are efficiently and reliably removed through secondary flute 28.

Again referring to Figure 13, the portion of hole 62 between dashed lines 70 would be drilled entirely by primary cutting edge 22. Because primary cutting edge 22 extends across the longitudinal axis of flat bottom drill 20, the drilling of stock material 58 would commence immediately upon contact of primary cutting edge 22 with stock material 58. Thus, unlike twist drills, it would be unnecessary to exert a substantial axial force to effect the drilling action. All of the stock material 58 that had been between dashed lines 70 would have been removed through primary flute 26. The width of this material would be equal to the distance from centerline of the drilled hole to dashed lines 70. As explained above, this distance typically is equal to one half of the radius. Because the primary flute 26 extends the full distance from the centerline to the periphery 38 of flat bottom drill 20, these narrow chips are efficiently and reliably removed through primary flute 26. To further encourage the egress of chips, the entire drill can be coated with tin.

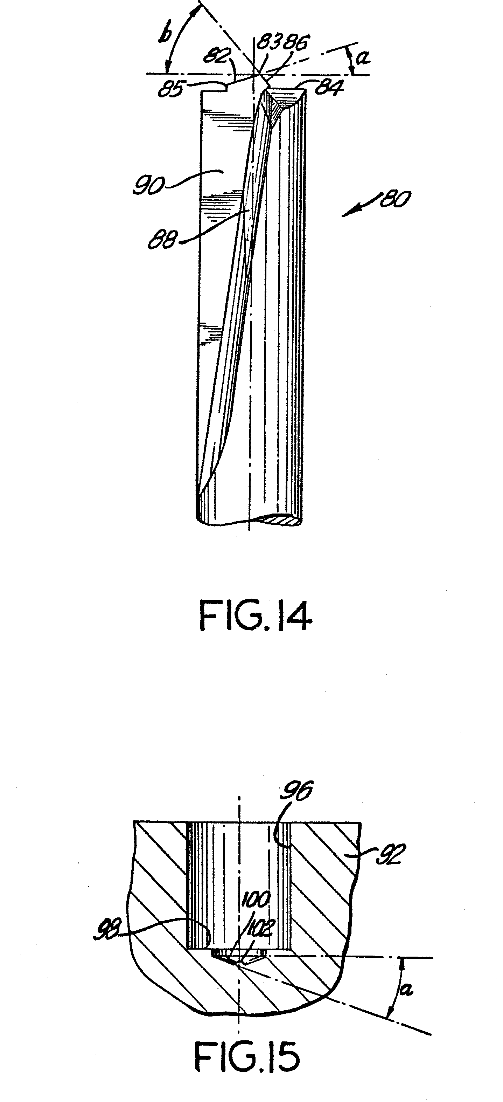

If the design specification of the workpiece does not require the central portion of the hole to be perpendicular to the side walls of the hole, and if the side walls of the hole must be drilled to even greater precision, it is not essential for the primary cutting edge of the drill to be perpendicular to the longitudinal axis. For example, Figure 14 shows a drill 80 for drilling a hole in which the central bottom portion will have a substantially concave conical configuration. Drill 80 includes primary cutting edge 82 and secondary cutting edge 84. To achieve the substantially concave configuration in the central portion of the bottom of the hole, the primary cutting edge 82 is disposed at an angle less than $90^\circ$ to the longitudinal axis of drill 80. Specifically, as the primary cutting edge 82 extends radially away from the longitudinal axis, the longitudinal distance to the mounting end of drill 80 decreases.

Primary cutting edge 82 of drill 80 extends from leading point 83 to outer primary cutting terminus 85. Leading point 83 is defined on primary cutting edge 82 as the portion of drill 80 that initially contacts the workpiece during a drilling operation. Thus, unlike the flat bottom drill shown in Figures 1 through 12 herein and claimed in European Patent Application No. 89123, the primary cutting edge 82 of the drill 80 shown in Figure 14, defines an angle "a" with respect to a plane extending orthogonally through the longitudinal axis. The angle "a" typically would be in the range of $0^\circ$ to $25^\circ$ depending on the design specifications of the workpieces. The leading ———————————————

point 83 is either at the longitudinal axis of the drill 80 or slightly to the non-cutting side of the longitudinal axis, as shown in Figure 14.

Primary chamfer 86 extends from leading point 83 to surface 88 of primary flute 90. The chamfered edge 86 defines angle "b" with respect to a plane extending perpendicularly through the longitudinal axis of the drill. Angle "b" preferably is approximately equal to 45°. By providing chamfered edge 86 in the manner shown in Figure 14, there will be no significant forces exerted on the portion of primary cutting edge 82 extending across the longitudinal axis. Hence, chipping that otherwise might occur adjacent leading point 83 is eliminated, thereby further extending the life of the subject drill.

The secondary cutting edge 84 is perpendicular to the longitudinal axis of the drill and is axially separated from the outer primary cutting terminus 85 by a distance that is a function of the feed rate. As a result, secondary cutting edge 84 will drill only the outer part of a hole while primary cutting edge 82 drills the innermost part.

Figure 15 shows a hole in workpiece 92 that is drilled by the drill 80 shown in Figure 14. Specifically, the hole in workpiece 92 shown in Figure 15 is defined by cylindrical side wall 96, shoulder 98, and conical central portion 100. Shoulder 98 is substantially perpendicular to cylindrical side walls 96, thereby reflecting the perpendicular relationship between secondary cutting edge 84 and the longitudinal axis of drill 80. The conical surface 100 in the central portion of the hole is angularly related to shoulder 98 by the angle "a". The angle "a" shown in Figure 15 equals the angle "a" shown on drill 80 in Figure 14. As explained above, angle "a" typically would be in the range of $0^o$ to $25^o$. The slight upward protrusion 102 in the central most portion of the hole is caused by the extension of primary cutting edge 82 across the longitudinal axis of drill 80 as shown in Figure 14. The radial dimensions of protrusion 102 can be reduced or entirely eliminated by moving leading point 83 of drill 80 closer to the longitudinal axis.

As explained above, the structure of drill 80 shown in Figure 14 is especially effective for drilling shallow holes to very precise tolerances in extremely hard materials. Drill 80 eliminates the need to perform successive drilling or reaming operations, as is generally required by the prior art drills. Specifically, the angle "a" of the primary cutting edge 82 facilitates the initial entry of the drill 80 into the hole and facilitates the self-centering of drill 80. Thus, if the design specifications do not require the central bottom portion of a hole to be perpendicular to the side walls of the hole, the embodiments of the subject invention as shown in Figure 14 can provide greater precision than prior art drills and even greater precision than the flat bottom drill disclosed in European Patent Application No. 89123.

In summary, a drill is provided that has opposed primary and secondary cutting edges. The primary cutting edge extends across and is disposed at an angle of less than $90^o$ to the longitudinal axis of the drill. The secondary cutting edge faces the opposite direction and is disposed on the opposite side of the drill. Additionally, the secondary cutting edge preferably is substantially perpendicular to the longitudinal axis of the subject drill and extends inwardly from the perimeter thereof a distance at least equal to the difference between the radius of the drill and the radial length of the primary cutting edge. The secondary cutting edge is offset from the primary cutting edge axially a distance which is a function of the feed rate of the drill. The relative sizes of the primary and secondary cutting edges is selected to assure substantial balancing of forces about the longitudinal axis of the drill. During a drilling operation, the primary cutting edge contacts the stock material initially and cuts the centermost portion of the hole in the stock material. Typically, the radius of this centermost portion will equal approximately half the entire radius of the hole. The secondary cutting edge follows the primary cutting edge and drills the outermost portion of the hole. Each cutting edge produces chips of stock material having a width approximately equal to one half the radius of the subject drill. The chips produced by the primary cutting edge are efficiently and reliably removed through the primary flute. The chips produced by the secondary edge similarly are efficiently and reliably removed through the secondary flute. By producing narrow chips that are segmented to opposite flutes, the chips move freely thereby precluding any chance that the chips could contribute to an imbalance of forces about the centerline of the subject flat bottom drill. This structure assures that very precise holes can be drilled in a very hard material by a single drilling operation without the use of excess equipment such as guide bushings.

While the preferred embodiment of the subject invention has been described and illustrated, it is obvious that various changes and modifications can be made therein without departing from the spirit of the present invention which should be limited only by the scope of the claims.

## CLAIMS

1.      A drill 80 having a substantially cylindrical side surface and opposed mounting and cutting ends, said drill comprising:

a primary cutting edge 82 at the cutting end of said drill, said primary cutting edge extending across the longitudinal axis of said drill to an outer primary cutting terminus 85 and the cylindrical side surface of said drill; and

a secondary cutting edge disposed at the cutting end of said drill and substantially diametrically opposed to said primary cutting edge 82, said secondary cutting edge 84 extending radially inwardly from said cylindrical side surface for a distance at least equal to the radial distance from said cylindrical side surface to said outer primary cutting terminus 85, said secondary cutting edge being offset from said primary cutting edge 82 along the longitudinal axis of said drill and away from said cutting end of said drill, said drill further including primary flute 90 and secondary flute extending toward the mounting end of said drill and away from said primary and secondary cutting edges 82,84 respectively, whereby said primary cutting edge 82 drills the radially innermost portion 100 of a hole and the secondary edge drills the radially outermost portion 98 of the hole, and whereby chips of material cut by the primary cutting edge 82 are channeled through the primary flute 92 and chips of material cut by the secondary cutting edge 84 are channeled through the secondary flute characterised in that said primary cutting edge 82 being aligned at an angle to the longitudinal axis of less than 90$^{\circ}$ such that the distance from said primary cutting edge to said mounting end varies inversely with the radial distance from said longitudinal axis.

2.      A drill as in claim 1 characterised in that said secondary cutting edge 84 is aligned perpendicularly to the longitudinal axis of the drill.

3.      A drill as in claim 1 characterized in that the angle between said primary cutting edge and said longitudinal axis is between 65$^{\circ}$ and 90$^{\circ}$.

4.      A drill as in claim 1 characterized in that at least a portion of said primary cutting edge 82 ———————— on the side of said longitudinal axis · opposite said primary cutting terminus 85 is chamfered angularly away from the cutting end of said drill.

5.      A drill as in claim 4 characterized in that the chamfer on said primary cutting edge 82 defines an angle of approximately 45$^{\circ}$ with respect to said longitudinal axis.

6.      A drill as in claim 1 characterized in that the drill is formed from a unitary piece of material.

0127322

FIG.1

FIG.2

FIG.3

FIG.4

FIG.5

0127322

FIG.6

FIG.7

FIG.8

FIG.9

FIG.10

FIG.II

FIG.12

FIG.13

0127322

4 / 4

FIG.14

FIG.15

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-2 083 767 (TOSHIAKI HOSOI) * Page 1, lines 92-96; page 2, lines 49-85; claim 10; figure 9 * | 1-3 | B 23 B 51/04 |
| A | | 6 | |
| Y | DE-C- 338 994 (STAPF) * Complete document * | 1-3 | |
| Y | DE-C- 370 364 (STAPF) * Complete document * | 1-3 | |
| A | DE-B-1 752 077 (MARWIN CUTTING TOOLS LTD.) * Column 2, lines 15-27; figure 1 * | 1 | |
| A | DE-U-8 117 222 (SCHMITZ) * Claim 1 * | 1 | TECHNICAL FIELDS SEARCHED (Int. Cl. 3) |
| A | GB-A-1 546 981 (SANDVIK AB) * Claim 1; page 1, lines 49-54 * | 1 | B 23 B 51/00 B 23 C 5/10 B 28 D 1/00 |
| P,D A | EP-A-0 089 123 (GENERAL ELECTRIC CO.) * Claims 1, 11 * | 1,6 | |

The present search report has been drawn up for all claims

| Place of search BERLIN | Date of completion of the search 26-07-1984 | Examiner MARTIN A E W |
|---|---|---|